Europäisches Patentamt

European Patent Office

Office européen des brevets

(11) Numéro de publication: **0014157**
A1

## (12) DEMANDE DE BREVET EUROPEEN

(21) Numéro de dépôt: **80400118.8**

(22) Date de dépôt: **25.01.80**

(51) Int. Cl.³: **F 02 B 33/14,** F 02 B 75/12, F 02 B 41/04

(30) Priorité: **26.01.79 FR 7902021**

(71) Demandeur: **Boitelle, Georges, 85, rue des Deux Frères Laporte, F-78680 Epone (FR)**

(43) Date de publication de la demande: **06.08.80**
**Bulletin 80/16**

(84) Etats contractants désignés: **AT DE GB IT NL SE**

(72) Inventeur: **Boitelle, Georges, 85, rue des Deux Frères Laporte, F-78680 Epone (FR)**

(54) **Dispositif à deux chambres pour moteur à combustion interne.**

(57) Le dispositif comprend deux chambres (1, 11) composées chacune d'un cylindre (2, 12) dans lequel glisse un piston (3, 13).

Les axes de révolution des cylindres (2, 12) et les pistons (3, 13) de ces deux chambres (1, 11) sont confondus.

Les deux pistons (3, 13) des deux chambres sont solidaires et transmettent leur mouvement linéaire alternatif au système de transformation de mouvement du moteur par l'intermédiaire d'une tige rigide (10).

Cela permet de dissocier les phases du cycle des moteurs à combustion interne auxquels elle s'applique de manière à obtenir plus de puissance et un meilleur rendement.

4/5

EP 0 014 157 A1

Dispositif à deux chambres pour moteur à combustion interne.

La pratique courante réserve le terme de moteur à combustion interne aux moteurs à allumage spontané du type diesel et le terme de moteur à explosion aux moteurs à allumage commandé du type des moteurs à essence. Pour plus de concision, le terme "moteur à combustion interne", plus générique, sera employé dans la suite du texte pour désigner ces deux types de moteurs.

Les moteurs à combustion interne comportent une sous-classe qui est celle des moteurs à piston dont le déplacement est linéaire, que ces moteurs soient dits à "pistons libres" ou non. Dans la suite du texte, ces moteurs seront appelés "moteurs à combustion interne classiques" et seront notés MCIC. Ils peuvent fonctionner selon un cycle dit à deux temps ou selon un cycle dit à quatre temps.

Pour plus de clarté, il convient de rappeler que les moteurs à combustion interne classiques comportent, au moins, un ensemble constitué de :

- un piston mobile dans un cylindre qui est fermé à sa partie supérieure par une culasse. L'espace ainsi délimité par le cylindre, le piston et la culasse, forme la chambre du moteur .

- un carter situé dans le prolongement du cylindre. et qui contient le mécanisme de transformation de mouvement auquel le piston transmet l'énergie délivrée par la combustion, soit au moyen d'une bielle, soit par une tige, soit par un fluide.

La chambre des "MCIC" est appelée à assumer les fonctions d'admission et de remplissage, de compression, de combustion, de détente et d'évacuation ou échappement des éléments de combustion, qu'il s'agisse des gaz de combustion aussi appelés gaz brûlés ou gaz d'échappement, ou du mélange combustible, également appelé gaz frais.

Ces fonctions sont réalisées traditionnellement en quatre phases, dans des séquences différentes, selon qu'il s'agit de moteurs à cycle à quatre temps ou de moteurs à cycle à deux temps.

Dans les MCIC à quatre temps, le remplissage de la chambre en gaz frais s'effectue au travers de la culasse par l'intermédiaire d'une ou plusieurs soupapes et/ou d'injecteurs. L'évacuation des gaz brûlés s'effectue également au travers de la culasse par l'intermédiaire d'une ou plusieurs soupapes. Le mouvement des soupapes et/ou d'injecteurs est réglé par un système de cames dont la rotation est strictement dépendante de celle de l'arbre moteur. L'inertie des soupapes s'oppose au bon ordonnancement des phases et limite ainsi le régime de rotation des MCIC. La modification du profil des cames permet de modifier légèrement les caractéristiques du MCIC.

Dans les MCIC à deux temps, le remplissage de la chambre en gaz frais s'effectue au travers de lumières, percées dans le cylindre, que le piston masque ou découvre dans son mouvement. Il en est de même pour l'évacuation des gaz brûlés. Le MCIC à deux temps est défini par construction et n'offre pas de possibilité de réglage de la durée des phases. D'autre part, les phases de remplissage de la chambre en gaz frais et d'évacuation des gaz brûlés sont simultanées. Ceci mène à une confusion des flux, préjudiciable au rendement. La pression du mélange combustible admis dans la chambre provoque un phénomène de "balayage" qui chasse le reliquat des gaz brûlés par l'orifice d'échappement. La nécessité de séparer les flux de gaz brûlés et de mélange combustible exige de donner au piston une forme particulière qui joue le rôle de déflecteur, et de raccourcir la phase de remplissage pour éviter une perte du mélange combustible par l'orifice d'échappement.

Quelque soit le type de MCIC, le remplissage de la chambre en gaz frais dépend da la durée de la phase de remplissage, de la quantité de gaz brûlés qui n'ont pas été expulsés hors de la chambre, de la pression avec laquelle le mélange combustible est introduit dans la chambre et du diamètre du ou des orifices d'admission. La multiplicité des fonctions réalisées par la chambre des MCIC présente des inconvénients bien connus et qui peuvent être résumés en ce que l'imbrication de phases d'admission-remplissage, de compression, de combustion-détente et d'échappement lors d'un cycle ne permet pas à chacune de ces phases de se dérouler complètement, compte tenu de la viscosité et de l'inertie des mélanges gazeux mis en jeu. Cet inconvénient est d'autant plus grand que le régime de rotation du moteur est plus élevé. Dans tous les cas, la phase d'admission et de remplissage du mélange combustible dans la chambre est celle qui conditionne directement ou indirectement la puissance et le rendement des MCIC.

Quelque soit le type de MCIC, à quatre temps ou à deux temps, la difficulté consiste donc à faciliter l'écoulement des flux d'entrée de gaz frais dans la chambre et l'évacuation du flux des gaz brûlés hors de celle-ci. Les solutions consistent :

- à diminuer les pertes de charge des flux dans les tubulures en perfectionnant les formes et les états de surface des dites tubulures,

- à augmenter les surfaces des orifices d'admission et d'échappement ou à en multiplier le nombre afin d'augmenter le volume des flux,

- à augmenter, par un dispositif externe, la vitesse du flux de mélange combustible qui entre dans la chambre, ainsi que la vitesse du flux des gaz brûlés qui sortent de la chambre.

En complément ou en substitution à la technique la plus courante qui consiste à utiliser la dépression naturelle de la chambre et/ou du carter moteur, provoquée par le retrait du piston, de nombreux procédés de remplissage forcé de la chambre sont utilisés. Parmi ceux-ci, on peut citer, à titre d'exemple, outre l'injection directe dans la chambre, l'injection indirecte du mélange combustible dans la chambre, qui consiste à injecter les gaz frais dans la pipe d'admission avant la soupape d'admission des MCIC à quatre temps, ou enfin, le cas du remplissage forcé par l'interposition d'un organe de surpression entre le carburateur et la chambre, ou en amont du carburateur. Ces organes de surpression du flux d'entrée du mélange combustible peuvent également servir à accélérer le flux des gaz d'échappement

Quelle que soit la technique choisie, l'augmentation de la vitesse du mélange combustible est obtenue, soit par une pompe auxiliaire externe au moteur proprement dit, ou annexée à celui-ci, soit par une disposition particulière des organes du moteur.

Les techniques qui mettent en jeu les pompes externes sont pratiquement liées aux procédés :

- d'injection directe ou indirecte du mélange combustible dans la chambre,

- de remplissage forcé par l'interposition d'un organe de surpression entre le carburateur et la chambre, ou en amont du carburateur.

Ces systèmes sont appliqués essentiellement aux moteurs à cycle à quatre temps pour des raisons de poids et de coût.

Les techniques qui mènent à annexer des organes de surpression au moteur sont essentiellement liées à l'emploi d'un carburateur et consistent principalement :

- soit à créer pour chaque piston moteur un ensemble cylindre piston supplémentaire qui joue uniquement le rôle de pompe

0014157

destinée à faciliter le remplissage de la chambre du moteur proprement dit,

      - soit à aménager la partie inférieure d'un piston du moteur pour provoquer une surpression qui permet de remplir la chambre d'un autre piston. Il est alors nécessaire que les pistons soient en nombre pair,

      - soit, enfin, à aménager la partie inférieure du piston afin d'obtenir une surpression qui permet de remplir la chambre du même piston par l'intermédiaire d'un canal de transfert. Ces techniques sont conçues principalement pour les moteurs à cycle deux temps.

      Les techniques qui conduisent à une disposition particulière des organes du moteur sont appliquées aux moteurs à cycle deux temps et consistent :

      - soit à utiliser le même carter moteur pour alimenter deux cylindres afin de bénéficier d'une meilleure surpression par élimination de volumes morts,

      - soit à créer une chambre unique pour deux cylindres, chaque piston actionnant un dispositif de transformation de mouvement séparé, c'est à dire possédant son propre carter. Ce procédé privilégie le volume plutôt que la vitesse des flux.

      Les solutions évoquées précédemment présentent toutes des inconvénients. Les techniques d'injection directe ou indirecte sont malaisées à mettre au point et les éléments auxquels elles font appel sont difficiles à fabriquer. Il faut, en effet, asservir le rythme, la pression et la durée de l'injection à la vitesse de rotation et à la température du moteur. Le système consomme pour son fonctionnement propre une part appréciable du travail du moteur et mène à un accroissement considérable de la masse et de l'encombrement de celui-ci. En tout état de cause, le système est limité par les possibilités offertes par l'échappement. Compte tenu de ce qui précède, ces techniques ne sont pratiquement appliquées qu'aux MCIC à quatre temps.

      Le remplissage forcé provoqué par l'utilisation d'une pompe disposée en amont du carburateur ou intercalée entre le carburateur et la chambre présente des inconvénients analogues à ceux des techniques d'injection, à qualité égale du remplissage de la chambre. Ces techniques s'appliquent aux MCIC à deux temps ou à quatre temps.

Les techniques qui consistent à annexer des organes de surpression au moteur présentent l'inconvénient de créer une complication mécanique considérable qui accroît le coût de l'ensemble, sa masse et son volume. Si la puissance du moteur est améliorée, son rendement diminue.

Les techniques qui utilisent une disposition particulière des organes du moteur n'amènent pas une amélioration significative du remplissage de la chambre et imposent des contraintes importantes dans la définition des moteurs par rapport à leur destination.

Partant de ces réalisations expérimentales cu industrielles et de l'analyse critique qui vient d'en être faite, le demandeur propose, dans la présente invention, un dispositif à deux chambres qui ne présente aucun des inconvénients sus-mentionnés.

Le dispositif, objet de l'invention, consiste en un tout fonctionnel, constitué de deux chambres dont la communication est assurée de manière opportune et dont chacune assure un rôle spécifique. L'une des chambres assure la fonction de combustion, l'autre assure la fonction d'admission et de précompression.

Le cylindre de la chambre de combustion sera appelé cylindre moteur, de même, le piston de la chambre de combustion sera appelé piston moteur. Enfin, l'ensemble constitué par une chambre de combustion, une chambre d'admission et de précompression et un carter contenant une chaîne de transformation de mouvement sera appelé unité motrice. Le moteur est constitué d'une ou plusieurs unités motrices.

La chambre de combustion est délimitée par le piston moteur mobile dans le cylindre moteur qui est lui-même fermé à sa partie supérieure par une culasse. La chambre d'admission et de précompression est délimitée par un piston mobile dans un cylindre qui est obturé à sa partie inférieure par une couronne circulaire. L'axe de révolution du piston moteur et celui du piston de la chambre d'admission et de précompression sont confondus, de même que les axes de révolution des deux cylindres correspondants. Le piston de la chambre d'admission et de précompression et le piston moteur sont liés par une pièce mécanique de liaison qui les rend solidaires dans leur déplacement linéaire. Cette pièce mécanique peut être réalisée de manière à ménager un volume libre compris entre ces deux pistons d'une part, et les deux cylindres correspondants d'autre part. Dans le cas où le diamètre du piston de la chambre de combustion et celui du piston de la chambre d'admission et de précompression ne sont pas égaux, le volume libre ci-dessus mentionné est variable. L'un des deux cylindres est percé d'évents au voisinage de leur raccordement pour permettre une libre communication du volume ci-dessus mentionné avec l'extérieur.

Le cylindre de la chambre d'admission et de précompression est intercalé entre le cylindre moteur d'une part et le carter du mécanisme de transformation du moteur d'autre part. Le cylindre moteur, le cylindre de la chambre d'admission et de précompression et le carter sont rendus solidaires, de manière à former un tout rigide. Le piston ainsi constitué est prolongé à sa partie inférieure par une tige rigide destinée à communiquer le mouvement alternatif du dit piston à la chaîne de transformation de mouvement du moteur. L'orifice central de la couronne circulaire qui ferme le cylindre de la chambre d'admission et de précompression est destiné à permettre le passage de la dite tige. L'étanchéité de cette ouverture est assurée par les moyens classiques tels que segments ou joints toriques, de manière à s'opposer au passage de gaz ou de fluides.

Afin de permettre l'entrée du mélange combustible dans la chambre d'admission et de précompression, celle-ci est percée d'un ou plusieurs orifices dans la zone atteinte par le piston au voisinage de son point mort bas. Chacun de ces orifices est muni d'une valve qui permet l'entrée dans la chambre d'admission et de précompression du mélange combustible délivré par exemple par un carburateur. La dite valve s'oppose au refoulement du mélange combustible hors de la chambre d'admission et de précompression. Chaque orifice ainsi équipé de sa valve sera appelé orifice d'admission.

La chambre d'admission et de précompression est percée d'un ou plusieurs orifices d'éjection destinés à permettre l'expulsion du mélange combustible hors de la dite chambre. La chambre de combustion est percée d'un ou plusieurs orifices de remplissage destinés à permettre l'injection des gaz frais à l'intérieur de la chambre de combustion. Le transfert des gaz frais de la chambre d'admission à la chambre de combustion peut s'effectuer de deux manières :

-- dans le premier cas, le ou les orifices d'éjection de la chambre d'admission et de précompression sont portés par le piston de la dite chambre, tandis que le ou les orifices de remplissage de la chambre de combustion sont portés par le piston de celle-ci. La communication des orifices d'éjection et des orifices de remplissage est assurée par des canaux percés au travers du piston de la chambre d'admission et de précompression, du piston de la chambre de combustion et de la pièce mécanique de liaison.

- dans le second cas, le ou les orifices d'éjection sont portés par la partie inférieure de la chambre d'admission et de précompression, au niveau de la zone atteinte par le piston à son point mort bas PMB. Le ou les orifices de remplissage sont alors portés par la culasse de la chambre de combustion. La communication entre les orifices d'éjection et les orifices de remplissage est assurée par un moyen approprié tel qu'une tubulure.

- Afin de permettre le transfert des gaz frais de la chambre d'admission et de précompression vers la chambre de combustion tout en interdisant le reflux des gaz contenus dans la chambre de combustion vers la chambre d'admission et de précompression, les orifices de remplissage portent une valve tarée. Dans le second cas exposé ci-dessus, la dite valve tarée peut être remplacée par un système classique tel que valve rotative, soupapes ou injecteurs actionnés par came ou poussoir.

Quand le dispositif à deux chambres, objet de l'invention, est utilisé selon un cycle à quatre temps, une communication supplémentaire peut être établie entre les orifices d'éjection de deux unités motrices dans un ordre tel que, la première unité motrice étant en phase de combustion détente, la seconde est en phase de remplissage. L'évacuation des gaz brûlés hors de la chambre de combustion s'effectue au travers du ou des orifices d'échappement. Ceux-ci sont, en règle générale, portés par la culasse de la chambre de combustion. L'ouverture et la fermeture des dits orifices d'échappement est réglée par les moyens classiques tels que valve rotative ou soupape actionnée par un système de cames ou de poussoirs.

Dans le cas particulier où le dispositif selon l'invention fonctionne selon un cycle à deux temps, les orifices d'échappement peuvent être portés par la partie inférieure du cylindre de la chambre de combustion, c'est à dire dans la zone atteinte par le piston moteur au voisinage de son point mort bas, de manière que les orifices d'échappement soient alternativement découverts et masqués par le piston moteur. Les orifices d'échappement débouchent alors dans une couronne de détente qui enveloppe partiellement le cylindre moteur.

La présente invention sera bien comprise dans la suite du texte qui ne donne qu'à titre d'exemple des formes de réalisation de la présente invention en référence aux dessins annexés selon lesquels :

La figure I résume en coupe axiale les éléments essentiels des MCIC qui sont : une chambre I délimitée par un cylindre 2, un piston 3 et une culasse 4. Le mouvement circulaire transmis par l'arbre 7 résulte du mouvement alternatif du piston 3 appliqué par l'intermédiaire d'une tige rigide 6 au mécanisme de transformation de mouvement du moteur, non figuré ici, que contient le carter 5.

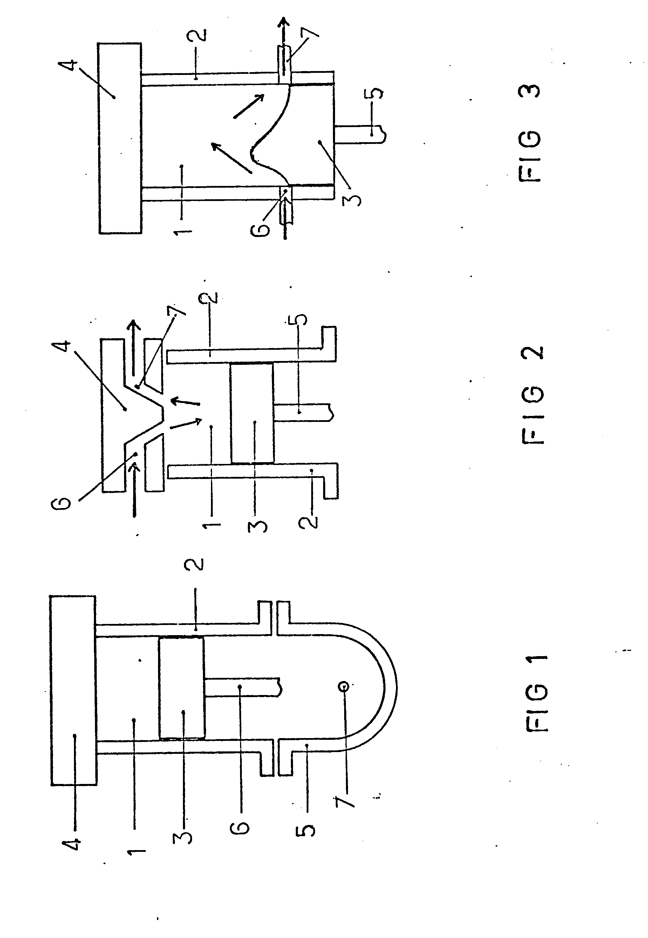

La figure 2 illustre les éléments spécifiques des MCIC à quatre temps selon une coupe axiale. La chambre I est délimitée par le cylindre 2, le piston 3 et la culasse 4. La culasse 4 est percée d'au moins un orifice d'échappement 7 et d'au moins un orifice d'admission 6. L'ouverture et la fermeture de ces orifices est réglée par des soupapes et/ou des injecteurs qui ne sont pas figurés ici.

La figure 3 schématise en coupe axiale les dispositions particulières des MCIC à deux temps. La chambre I est délimitée par le cylindre 2, le piston 3 et la culasse 4. Les orifices d'admission 6 et d'échappement 7 sont portés par la partie inférieure du cylindre, de manière à être alternativement découverts ou obturés par la jupe du piston 3 au cours du mouvement de va et vient de celui-ci. La tête du piston 3 affecte une forme particulière qui constitue un déflecteur destiné à éviter la confusion des flux de gaz qui traversent la chambre.

Il est aisé de constater que la chambre des MCIC remplit à elle seule toutes les fonctions, ce qui présente de nombreux inconvénients. La Séparation des flux de gaz frais et de gaz brûlés est obtenue dans les MCIC à quatre temps en répartissant le cycle de fonctionnement sur deux tours de moteur et en réglant le mouvement des flux par des soupapes ou des injecteurs. Il en résulte, d'une part, une perte de puissance spécifique puisque chaque piston ne remplit sa fonction motrice que pendant un quart de son temps de fonctionnement dans le meilleur des cas, et, d'autre part, une perte de rendement puisque le mouvement des soupapes et/ou des injecteurs consomme une énergie importante. Enfin, l'inertie mécanique des soupapes et injecteurs constitue une limite à la vitesse de rotation des MCIC à quatre temps.

Les organes du MCIC à deux temps sont beaucoup plus simples et permettent des vitesses de rotation plus élevées, mais ceci est obtenu au détriment du rendement. En effet, la forme de déflecteur donnée à la tête du piston ne peut empêcher qu'une partie des gaz frais s'échappe de la chambre en même temps que lesgaz brûlés. L'augmentation de la vitesse de rotation s'accompagne d'un appauvrissement du remplissage de la chambre qui limite dans la pratique la puissance de ce type de MCIC.

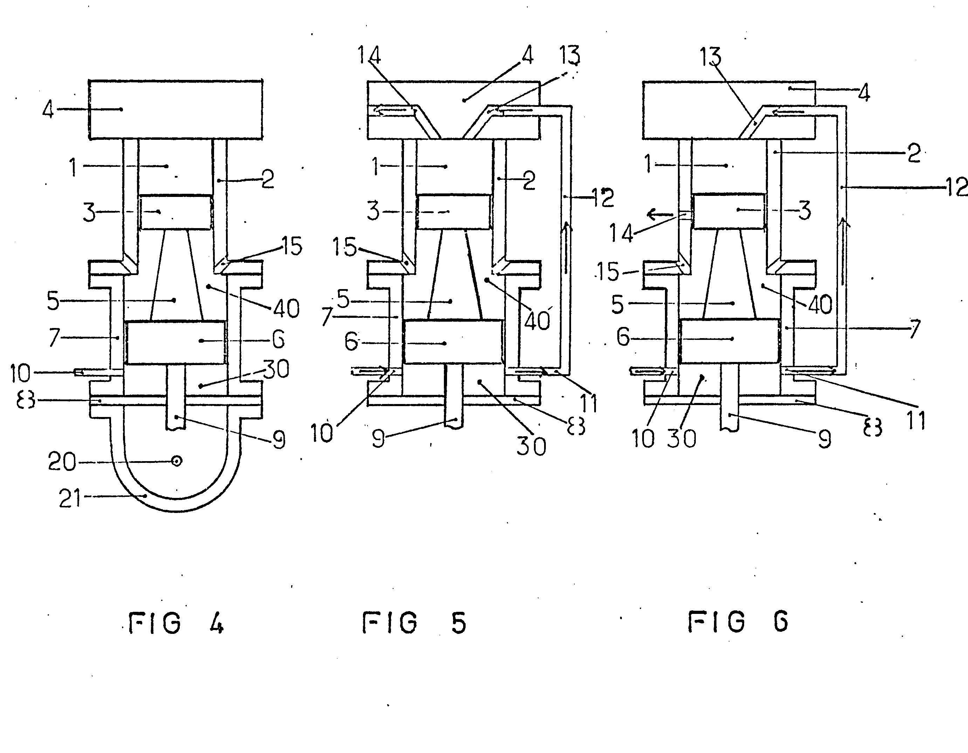

Par contre, en se rapportant à la figure 4 qui schématise une coupe axiale représentant la mise en oeuvre du dispositif à deux chambres selon l'invention, on reconnaîtra le rôle spécifique dévolu à chacune d'elles. La chambre I dite de combustion est délimitée par le cylindre moteur 2, le piston moteur 3 et la culasse 4. La chambre 30 dite d'admission et de précompression est délimitée par le cylindre 7, le piston 6 et la couronne circulaire 8. La pièce mécanique 5 assure la liaison des pistons 3 et 6. La tige rigide 9 est liée mécaniquement au piston 6. Le système de transformation de mouvement du moteur non figuré ici, contenu dans le carter 2I transforme le mouvement alternatif de la tige 9 en un mouvement circulaire délivré par l'arbre 2020. Le piston 3 et le cylindre 2 de la chambre de combustion, le piston 6 et le cylindre 7 de la chambre d'admission et de précompression ont leurs axes de révolution confondus. La culasse 4, le cylindre 2, le cylindre 7, la couronne circulaire 8 et le carter 2I sont liés mécaniquement de manière à former un tout rigide. Le passage de la tige rigide 9 au travers de l'orifice central de la couronne circulaire 8 est rendu étanche par des moyens classiques tels que segments ou joints toriques. L'espace 40, délimité par le cylindre 2 et le piston 3 d'une part, le cylindre 7 et le piston 6 d'autre part, est en communication libre avec l'extérieur par le moyen d'au moins un évent I5 percé dans le cylindre 2 ou dans le cylindre 7. L'admission des gaz frais dans la chambre 30 est assurée par au moins un orifice d'admission IO percé au bas du cylindre 7, au niveau atteint par le piston 6 quand celui-ci est à son point mort bas P.B, l'orifice d'admission IO est muni d'une valve qui autorise l'entrée dans la chambre d'admission et de précompression des gaz frais délivrés par exemple par un carburateur, la dite valve s'oppose au refoulement des gaz frais hors de la chambre d'admission et deprécompression 30. La chambre d'admission et de précompression 30 est mise opportunément en communication avec la chambre de combustion I afin d'assurer le remplissage de celle-ci

en gaz frais. Cette communication des deux chambres peut être réalisée de deux manières selon le résultat souhaité.

La figure 5 schématise une coupe axiale du dispositif
selon l'invention dans lequel la communication de la chambre d'admission et de précompression 30 avec la chambre de combustion I est
assurée de manière indirecte. La partie inférieure de la chambre
d'admission et de précompression 30 porte, au moins, un orifice
d'éjection II prolongé d'une tubulure I2 qui raccorde le dit orifice
II à l'orifice de remplissage I3 que porte la culasse 4. L'ouverture
et la fermeture de l'orifice I3 sont réglés soit par une soupape,
soit par une valve tarée. Dans le cas particulier du fonctionnement
du dispositif selon l'invention suivant un cycle à quatre temps, le
même orifice de remplissage I3 d'une unité motrice peut être raccordé à un orifice d'éjection d'une autre unité motrice dans un ordre
tel que la première unité motrice étant en phase de remplissage, la
seconde soit en phase de détente. Le double raccordement de l'orifice de remplissage d'une unité motrice permet de doubler le volume du
flux de gaz frais injecté dans la chambre de combustion de la dite
unité motrice.

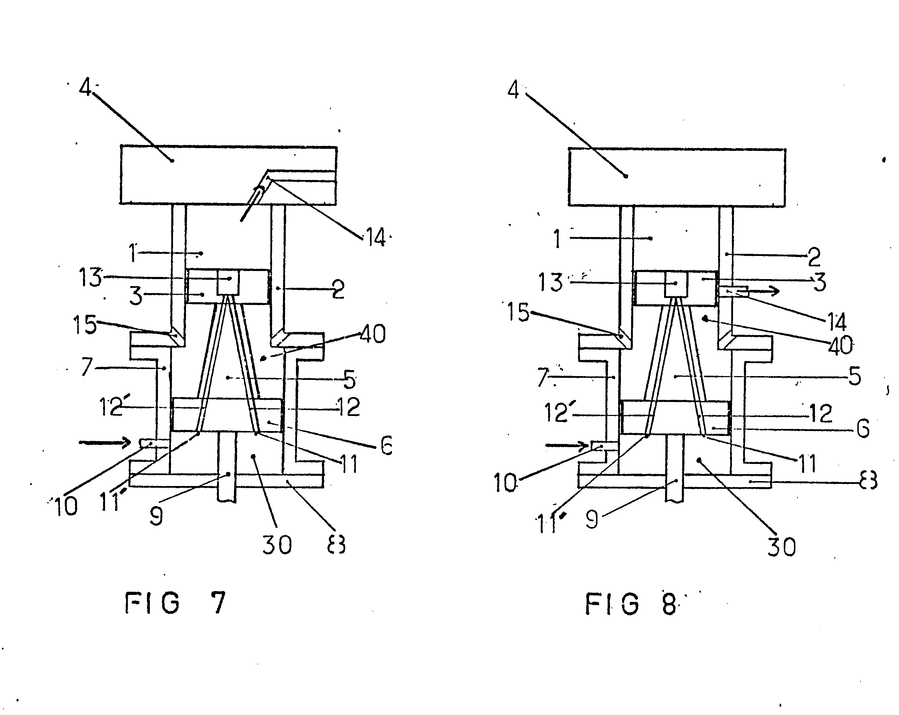

La figure 6 schématise une coupe axiale du dispositif
selon l'invention, dans lequel la communication de la chambre d'admission et de précompression 30 avec la chambre de combustion I est
assurée de manière indirecte. La partie inférieure de la chambre
d'admission et de précompression 30 porte, au moins, un orifice d'éjection II prolongé d'une tubulure I2 qui se raccorde à l'orifice de
remplissage I3 que porte la culasse 4. L'ouverture et la fermeture
de l'orifice I3 sont réglés par une soupape ou un injecteur. L'orifice d'éjection I4 de la chambre de combustion I est porté par la
partie inférieure du cylindre I. Cette organisation est applicable
aux MCIC à cycle deux temps.

La figure 7 schématise la coupe axiale du dispositif
selon l'invention dans le cas où la communication entre les deux
chambres est établie directement au travers des pistons et de la
pièce de liaison. Le piston 6 de la chambre d'admission et de précompression 30 porte, au moins, un orifice d'éjection II, tandis que
le piston moteur 3 porte, au moins, un orifice de remplissage I3. La
communication entre les orifices II et I3 est assurée par, au moins,
un canal I2 percé au travers de la pièce deliaison 5 qui lie les deux
pistons 3 et 6. L'orifice de remplissage I3 porte une valve tarée qui autorise les gaz frais à pénétrer dans la chambre de combustion I mais s'oppose au reflux des gaz contenus dans la chambre I vers la chambre d'admission et de précompression 30. L'expulsion des gaz de combustion hors de la chambre de combustion peut s'effectuer de deux manières.

La figure 7 schématise une coupe axiale du dispositif selon l'invention dans lequel l'orifice d'échappement I4 est porté par la culasse 4 de manière à permettre l'éjection des gaz brûlés hors de la chambre de combustion I. L'ouverture et la fermeture de l'orifice d'échappement I4 sont réglés par des moyens classiques tels que soupape ou valve rotative. Chaque unité motrice porte, au moins, un orifice d'échappement.

La figure 8 schématise une coupe axiale du dispositif selon l'invention dans lequel l'orifice d'échappement I4 est porté par le cylindre 2 de la chambre de combustion I au voisinage de la zone atteinte par le piston 3 quand il est à son point mort bas PMB. L'orifice d'échappement I4 est alternativement découvert et masqué par le piston moteur 3. Cette disposition est spécifique des moteurs deux temps. Chaque unité motrice porte, au moins, un orifice d'échappement.

Le fonctionnement très simplifié du dispositif selon l'invention se résume comme suit :

Partant du point mort haut, les pistons des deux chambres descendent simultanément vers leur point mort bas. Dans cette phase, les gaz frais contenus dans la chambre d'admission et de précompression sont comprimés, ce qui autorise le remplissage de la chambre de combustion d'une ou plusieurs unités motrices. Lorsque les deux pistons, dépassant leur point mort bas remontent vers leur point mort haut, le volume de la chambre d'admission et de précompression augmente, créant une dépression qui autorise le remplissage de la dite chambre. Les diverses possibilités de positionnement relatif des orifices de remplissage et d'échappement offertes par le dispositif selon l'invention permettent d'allonger ou de raccourcir le trajet des gaz frais selon les besoins spécifiques du moteur désiré.

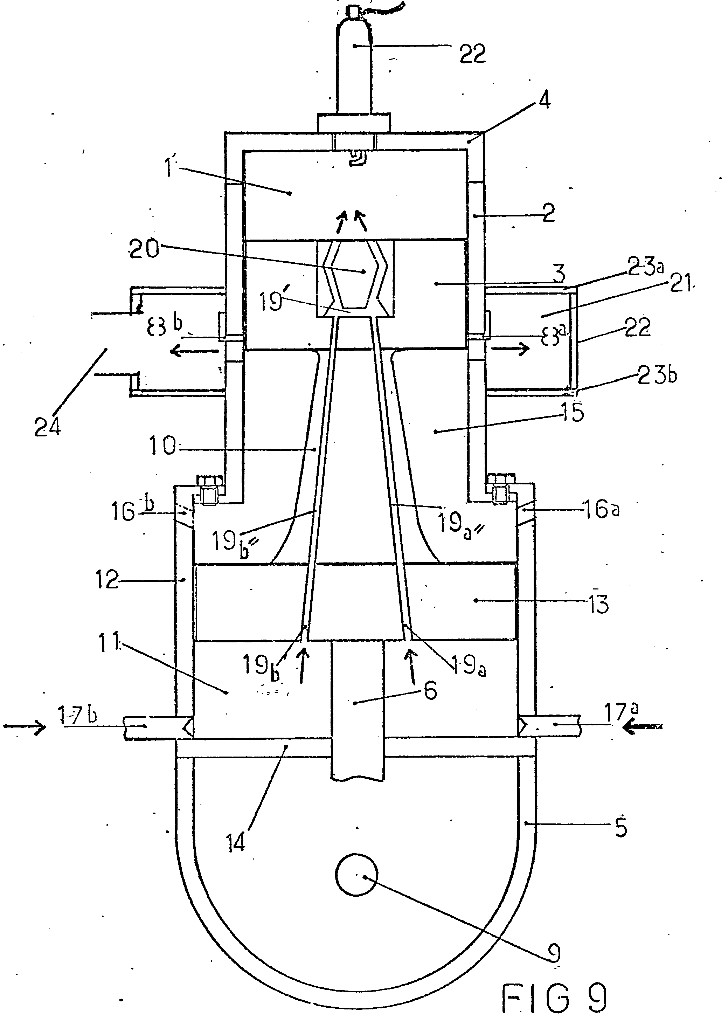

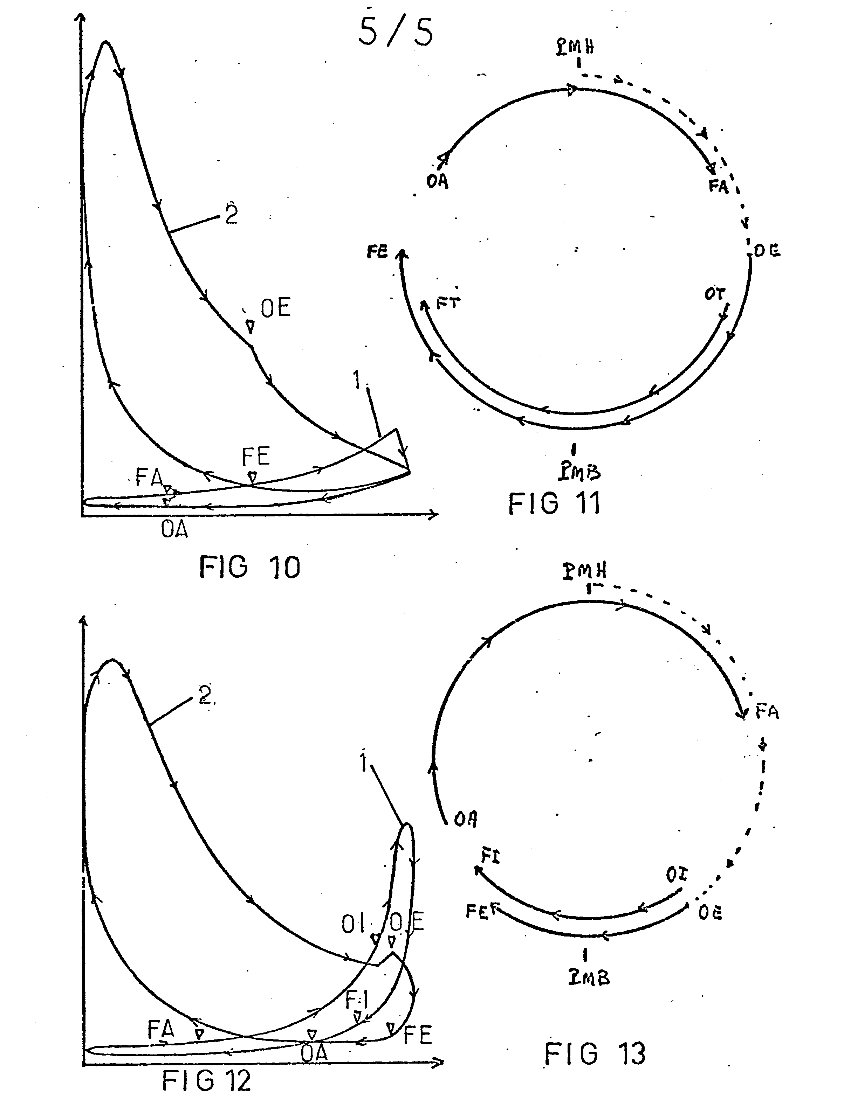

La figure 9 est une coupe axiale du dispositif selon l'invention qui illustre une réalisation particulière de l'invention dans un mode de fonctionnement à deux temps, analogue à celui schématisé par la figure 8 dans le cas particulier d'un moteur à explosion, c'est à dire à combustion provoquée. L'espace délimité par le cylindre moteur 2, le piston moteur 3 et la culasse 4, constitue la chambre de combustion I. L'espace délimité par le cylindre I2, le piston I3 et la couronne circulaire I4, constitue la chambre d'admission et de précompression II. La pièce de liaison IO assure la relation mécanique des pistons 3 et I3. La tige rigide 6 communique le mouvement alternatif des pistons 3 et I3 au mécanisme de transformation de mouvement du moteur non figuré ici, quecontient le carter 5. Le mouve ment circulaire résultant de cette transformation est transmis par l'arbre moteur 9. L'espace I5, délimité par le piston moteur 3 et le piston I3 d'une part, et les cylindres 2 et I2 correspondants d'autre part, est muni d'évents I6a et I6b qui permettent une libre communication de cet espace avec l'extérieur. La chambre d'admission et de précompression II est percée à sa partie inférieure d'orifices d'admission I7a et I7b. Les orifices I7a et I7b sont munis de valves qui autorisent l'entrée du mélange combustible dans la chambre d'admission et de précompression II, mais s'opposent à son reflux. Ces orifices sont en communication avec un carburateur. Le cylindre 2 de la chambre de combustion I est percé d'orifices d'échappement 8a et 8b qui débouchent dans le collecteur d'échappement 2I qui est raccordé au pot d'échappement 24. Ces orifices sont découverts par le piston moteur 3 quand celui-ci est à son point mort bas. Le collecteur d'échappement est constitué d'un cylindre 22, fermé à sa partie supérieure et à sa partie inférieure par des couronnes circulaires 23a et 23b qui assurent une étanchéité suffisante du collecteur d'échappement 2I avec le cylindre2 dela chambre de combustion I. Le piston I3 de la chambre d'admission et de précompression est percé d'orifices I9a et I9b qui communiquent avec l'orifice de remplissage I9' porté par le piston moteur 3, par l'intermédiaire des canaux I9"a et I9"b dont est percée la pièce de liaison IO.

Le fonctionnement de cette réalisation particulière est le suivant : le piston moteur 3 étant au point mort bas PMB, le piston I3 de la chambre d'admission et de précompression II est également au point mort bas etle volume de la chambre d'admission et de précompression estminimum . Lorsque le piston moteur 3 remonte vers son point mort haut PMH, le volume de la chambre d'admission et de précompression II augmente, créant une dépression qui provoque l'ouverture des valves portées par les orifices d'admission I7a et I7b.

0014157

Le mélange combustible délivré, par exemple par un carburateur, pénètre dans la chambre d'admission et de précompression II. Arrivés à leur point mort haut PMH, les pistons 3 et I3 redescendent après que l'explosion ait eu lieu dans la chambre de combustion I. La pression dans lachambre de combustion est alors considérable. La valve 20 portée par l'orifice I9' du piston moteur 3 est maintenue en position fermée par la pression. Les gaz de combustion ne peuvent donc pénétrer dans la chambre d'admission et de précompression II. Pendant le même temps où les pistons 3 et I3 redescendent vers leur point mort bas PMB, le volume de la chambre d'admission et de précompression II diminue, la pression du mélange combustible contenu dans la chambre II augmente, bloquant les valves portées par les orifices I7a et I7b en position fermée. De ce fait, le reflux du mélange combustible hors de la chambre d'admission et de précompression II ne peut s'effectuer. La chambre II est complètement fermée à cette étape du cycle puisque l'étanchéité du passage de la tige 6 au travers de la couronne circulaire est assurée. Lorsque le piston moteur 3 atteint les orifices d'échappement 8a et 8b, la pression des gaz brûlés dans la chambre de combustion I baisse brutalement. La pression du mélange combustible contenu dans la chambre d'admission et de précompression II étant alors voisine de son maximum, la valve 20, portée parl'orifice de remplissage I9' est débloquée et laisse échapper un jet puissant du mélange combustible contenu dans la chambre II, vers le haut de la chambre de combustion I . Le jet de mélange combustible animé d'une grande vitesse, finit de chasser les gaz brûlés vers les orifices d'échappement 8a et 8b, pendant que l'ensemble des pistons 3 et I3 atteignent puisdépassent leur point mort bas. Lorsque les orifices d'échappement 8a et 8b sont fermés par le piston moteur 3 dans laphase de remontée de celui-ci, le rapport des pressions dans les chambres I et II s'inverse, la valve 20 se ferme, tandis que les valves portées par les orifices I7a et I7b s'ouvrent. Le cycle recommence alors. Le volume I5 est variable. Cette zone est en communication avec l'extérieur grâce aux évents I6a et I6b. L'air est aspiré et refoulé alternativement, assurant ainsi le refroidissement du piston moteur 3 et des parois du cylindre moteur 2.

Les remèdes apportés par la présente invention aux inconvénients présentés par les moteurs à combustion interne classiques ont les effets suivants :

I - une augmentation du rendement du moteur,

2 - une plus forte puissance spécifique du moteur,

3 - une simplification de la fabrication,

4 - une plus grande possibilité de réglage et
    d'adaptation,

5 - un encombrement et une masse moindre à
    puissance égale du moteur.

La comparaison des résultats obtenus par les dispositifs classiques et par le dispositif objet de l'invention, peut être
établie à titre d'exemple pour deux moteurs à cycle deux temps, l'un
étant un moteur deux temps classique, l'autre correspondant au dispositif selon l'invention appliqué à un moteur à cycle deux temps
avec injection du mélange combustible au travers du piston moteur,
tel que le représente la figure 9. Les avantages apportés seront
mieux compris à l'examen des classiques diagrammes circulaires de
cycle et de pression-volume.

- La figure I0 schématise le diagramme pression-
volume d'un MCIC à deux temps.

- La figure II schématise le diagramme circulaire
des phases d'un MCIC à deux temps.

- La figure I2 schématise le diagramme de pression-
volume du dispositif à deux chambres selon l'invention.

- La figure I3 schématise le diagramme circulaire
des phases du dispositif à deux chambres selon l'invention.

I/ L'amélioration du rendement du moteur est due aux
raisons suivantes :

La durée de la phase de détente représentée par l'arc
PMH-OE est plus longue pour un moteur muni du dispositif à deux chambres selon l'invention (fig I3) que pour un MCIC (fig II). Ce résultat est obtenu grâce à la réduction de la durée de la phase d'échappement représentée par l'arc OE-FE. L'échappement est malgré tout
meilleur puisque les orifices d'échappement sont multipliés au bas
de la chambre de combustion (fig 9). Une telle multiplication des
orifices d'échappement n'est pas possible sur les MCIC à deux temps,
puisque les orifices d'échappement et de remplissage doivent être opposés.

La courbe I (fig I0) représente le diagramme de pression-volume du carter moteur d'un MCIC 2 temps, tandis que la courbe2 représente le diagramme pression-volume de la chambre. La courbe I (fig I2) représente le diagramme de pression-volume de la chambre d'admission et de précompression du dispositif selon l'invention, cependant que la courbe 2 représente le diagramme de pression-volume de la chambre de combustion. Du fait de la pression importante (courbe I fig I2) qui règne dans la chambre d'admission et de précompression au moment opportun, une vitesse considérable est imprimée aux gaz frais injectés dans la chambre de combustion. De ce fait, il n'y a plus de confusion avec le flux des gaz d'échappement, comme c'est le cas des MCIC à deux temps. Les pertes de mélange combustible par l'orifice d'échappement sont pratiquement supprimées.

La forme de déflecteur (fig 3) donnée au piston du MCIC à deux temps est destinée à éviter la confusion des flux, mais ne permet pas d'utiliser au mieux l'énergie délivrée par la combustion. Le dispositif à deux chambres, selon l'invention, n'impose pas de contrainte dans la détermination de la forme du piston qui peut alors être optimisée pour utiliser au mieux l'énergie délivrée par la combustion.

La masse de l'équipage mobile, formé par les pistons du dispositif à deux chambres constitue un volant d'inertie dont l'énergie cinétique vient aider à comprimer le mélange combustible contenu dans la chambre d'admission et de précompression. une partie de cette énergie cinétique est restituée au piston moteur lors de la remontée de celui-ci vers son point mort haut PMH par la détente du mélange combustible, contenu dans la chambre d'admission et de précompression. Ce phénomène n'existe pas dans les MCIC à deux temps, comme le montre la figure IO , courbe I. L'énergie cinétique de l'équipage mobile d'un MCIC est absorbée par un volant moteur et par les frottements.

La comparaison des diagrammes II et I3 montre que l'ouverture de l'échappement OE est fortement retardée dans le cycle du dispositif à deux chambres. La phase de détente est donc allongée. Ceci autorise à retarder l'instant d'allumage tout en permettant une combustion complète. De cefait, à remplissage égal de la chambre de combustion, la pression subie par le piston moteur, dans la phase de remontée vers le point mort haut PMH (courbe 2

0014157

fig I2) est plus faible que dans les MCIC (courbe 2 fig IO). Ceci contribue à améliorer le rendement.

Le collecteur d'échappement 2I (fig 9) provoque une accélération du flux des gaz d'échappement.

2/ L'amélioration de la puissance spécifique est obtenue par un meilleur remplissage de la chambre de combustion. Dans les MCIC à deux temps, l'admission, le remplissage et la compression sont assurés en même temps par la même chambre. Dans le dispositif à deux chambres selon l'invention, l'admission et une première phase de compression sont assurées par la chambre d'admission et de précompression, tandis que la chambre de combustion assure le remplissage et une deuxième phase de compression.

L'augmentation du régime de rotation des MCIC à deux temps est limité par l'appauvrissement du remplissage dû à l'inertie des flux de gaz. Ce n'est pas le cas pour le dispositif à deux chambres selon l'invention, puisque la vitesse communiquée aux flux de gaz augmente en même temps que s'accroit le régime de rotation du moteur. La puissance à haut régime est donc améliorée.

3/ La simplification de la fabrication résulte du fait que le dispositif à deux chambres selon l'invention, autorise la suppression de certaines contraintes auxquelles sont soumis les MCIC à deux temps :

    - Le bossage déflecteur de la tête de piston qui tend à éviter le mélange des flux dans la chambre des MCIC n'a plus de raison d'être,

    - Les lumières des MCIC à deux temps doivent être usinées avec grande précision et avoir un excellent état de surface, ce qui complique la fabrication. L'ensemble des lumières de transfert qui constitue l'élément fondamental des MCIC à deux temps est supprimé dans le dispositif selon l'invention.

    - La simplification de la fabrication apportée par le dispositif à deux chambres selon l'invention, résulte aussi du fait qu'une partie des forces de réaction aux mouvements de l'équipage mobile sont apportées par la compression d'un gaz et non plus par des éléments mécaniques comme c'est le cas dans les MCIC.

    - L'architecture totale des MCIC doit être repensée pour chaque usage, puisque les paramètres principaux sont fixes. Dans le dispositif à deux chambres selon l'invention, les paramètres principaux sont réglables. Ceci autorise une simplification et un abaissement des coûts de la fabrication.

4/ Un avantage supplémentaire de l'invention consiste en ce que les paramètres principaux peuvent être réglés. Le réglage du tarage des valves des orifices d'admission I7a et I7b (fig 9) de la chambre d'admission et de précompression, permet de faire varier le diagramme de pression-volume de la chambre d'admission et de précompression. La force de réaction qui absorbe l'énergie cinétique de l'équipage mobile peut donc être modifiée ainsi que l'énergie motrice qui est restituée au piston lors de sa remontée vers son PMH (fig I2 courbe I).

La modification du tarage de la valve d'injection 20 (fig 9) du mélange combustible dans la chambre de combustion permet de faire varier le diagramme de pression-volume de la chambre de combustion et celui de la chambre d'admission et de précompression (courbes 2 et I fig I2).

La hauteur et le profil des orifices d'échappement peuvent être modifiés par l'introduction de bagues calibrées dans les dits orifices. Ceci est possible du fait que le collecteur d'échappement est démontable. L'action sur un ou plusieurs de ces réglages permet donc, pour une masse donnée de l'équipage mobile :

- soit d'obtenir le couple maximum du moteur au régime de rotation souhaité,

- soit de priviligier la recherche d'un régime de rotation élevé,

- soit de priviligier la puissance du moteur,

- soit de priviligier le rendement du moteur.

5/ L'encombrement et la masse d'un moteur équipé du dispositif à deux chambres selon l'invention sont moindres que l'encombrement et la masse d'un MCIC de puissance égale. En effet:

- le volant-moteur peut être supprimé puisque la remontée du piston moteur de son PMB vers son PMH est une phase motrice en début de course,

- L'accélération des flux est obtenue sans adjonction de dispositifs externes,

- Le refroidissement interne des cylindres et du piston moteur, rendu possible grâce à l'espace de volume variable ménagé entre le piston moteur et le piston de la chambre d'admission et de précompression, autorise une plus grande liberté dans le choix des matériaux.

Les forces de réaction qui permettent la remontée des pistons vers le PMH étant supportées par la chambre d'admission et de précompression et non plus par le système de transformation de mouvement comme c'est le cas des MCIC, le système de transformation peut être allégé. De plus, du fait qu'une partie de la phase de remontée des pistons vers leur PMH est motrice, le couple est plus régulier et les engrenages sont moins sollicités.

La chaîne de transformation de mouvement contenue dans le carter moteur peut être d'un type quelconque. Cependant, le dispositif selon l'invention prend toute son efficacité quand il est associé à une chaîne cinématique, qui transforme directement le mouvement alternatif linéaire des pistons en un mouvement circulaire du type de ceux basés sur le principe de l'épicycloïde de rapport un demi.

L'association de deux dispositifs à deux chambres identiques, montés à plat et en opposition de part et d'autre d'une telle chaîne cinématique, constitue un moteur Flat Twin parfaitement équilibré, capable d'une très grande vitesse de rotation et d'un rendement très élevé. En effet, toutes les forces de réaction s'équilibrent directement entre les deux dispositifs opposés.

Le dispositif à deux chambres selon l'invention permet donc la réalisation de moteurs à combustion interne, qu'ils soient à cycle deux temps ou à cycle quatre temps. De plus, si l'espace 40 (fig 4) est priviligié, le dispositif permet de réaliser un compresseur intégré au moteur, puisque cet espace, ménagé entre la chambre de combustion et la chambre d'admission et de précompression, a un volume variable.

0014157

REVENDICATIONS

———————————————————

I - Dispositif de transformation de l'énergie de combustion d'un mélange combustible en énergie mécanique pour moteur à combustion interne caractérisé en ce qu'il est composé de deux chambres comportant chacune un piston mobile dans un cylindre dont les axes de révolution respectifs sont confondus, que le cylindre de la première chambre est mécaniquement lié à celui de la seconde chambre, que la première chambre est fermée par une couronne circulaire tandis que la seconde est fermée par une culasse, que le piston de la première chambre est mécaniquement lié à celui de la seconde chambre par une pièce mécanique de liaison, que le mouvement alternatif des pistons des deux chambres est transmis à la chaîne de transformation de mouvement du moteur par un mécanisme approprié dont le passage au travers de la couronne circulaire qui ferme la première chambre est rendu étanche par des moyens ordinaires, que la première chambre étant percée d'au moins un orifice d'admission muni d'une valve qui s'oppose au reflux du mélange combustible vers l'extérieur et d'au moins un orifice d'éjection, assure les phases d'admission et de précompression du mélange combustible, que la seconde chambre, portant au moins un orifice de remplissage et au moins un orifice d'échappement, assure les phases de remplissage, de compression et de combustion du mélange et les fonctions de détente et d'échappement des gaz brûlés, dans une séquence telle que l'exécution des différentes phases du cycle du moteur soit judicieusement répartie entre les deux chambres, conformément à leurs vocations spécifiques respectives.

2 - Dispositif de transformation de l'énergie de combustion d'un mélange combustible en énergie mécanique pour moteur à combustion interne selon la revendication I caractérisé en ce que la communication des deux chambres est assurée par au moins un conduit dont l'ouverture et la fermeture sont commandées par un obturateur mobile réglable qui autorise le passage du mélange combustible de la première chambre vers la seconde, mais s'oppose au reflux des gaz contenus dans la seconde chambre vers la première chambre, et que le réglage du dit obturateur mobile permet de modifier à volonté les caractéristiques de fonctionnement du moteur.

3 - Dispositif de transformation de l'énergie de combustion d'un mélange combustible en énergie mécanique pour moteur à combustion interne selon les revendications I et 2 caractérisé en ce que les pistons et les cylindres respectifs des deux chambres n'ont pas le même diamètre et que des orifices de communication avec l'extérieur sont percés au niveau de la jonction des deux cylindres.

4 - Dispositif de transformation de l'énergie de combustion d'un mélange combustible en énergie mécanique pour moteur à combustion interne selon les revendications I à 3 caractérisé en ce que l'espace compris entre les deux chambres a un volume variable avec le déplacement des deux pistons qui constitue un étage compresseur de gaz ou de fluide intégré au moteur.

5 - Dispositif de transformation de l'énergie de combustion d'un mélange combustible en énergie mécanique pour moteur à combustion interne selon l'une des revendications I à 4 caractérisé en ce que les orifices d'échappement débouchent dans une couronne d'échappement démontable qui est concentrique au cylindre de la seconde chambre.

6 - Dispositif de transformation de l'énergie de combustion d'un mélange combustible en énergie mécanique pour moteur à combustion interne selon l'une des revendications I à 5 caractérisé en ce que le mouvement alternatif des pistons est communiqué par une pièce mécanique dont le mouvement est alternatif et linéaire, à un mécanisme de transformation de mouvement linéaire alternatif en un mouvement rotatif basé sur le principe de l'épicycloïde de rapport un demi.

7 - Dispositif de transformation de l'énergie de combustion d'un mélange combustible en énergie mécanique pour moteur à combustion interne selon une des revendications I à 6 caractérisé en ce qu'il est associé à un autre dispositif identique situé à plat, en opposition par rapport à un système de transformation de mouvement linéaire alternatif en mouvement rotatif et dont les pièces mécaniques qui transmettent le mouvement alternatif des pistons sont situées strictement dans le prolongement l'une de l'autre, et sont rendues solidaires.

FIG 1

FIG 2

FIG 3

FIG 4          FIG 5          FIG 6

2/5

0014157

FIG 7

FIG 8

FIG 9

5/5

0014157

FIG 10

FIG 11

FIG 12

FIG 13

**Office européen des brevets**

**RAPPORT DE RECHERCHE EUROPEENNE**

| CLASSEMENT DE LA DEMANDE (Int. Cl. 4) |
|---|
| F 02 B 33/14 |
| 75/12 |
| 41/04 |

## DOCUMENTS CONSIDERES COMME PERTINENTS

| Catégorie | Citation du document avec indication, en cas de besoin, des parties pertinentes | Revendication concernee |
|---|---|---|
| X | <u>CH - A - 116 429</u> (BUCHI)<br>* Figures 2,3; page 2, colonne de droite, paragraphes 1,2 * | 1,2,5-7 |
| | -- | |
| X | <u>US - A - 3 177 855</u> (HENDERSHOT)<br>* Figure 2; colonne 2, ligne 58 - colonne 3, ligne 64 * | 1,3,5-7 |
| | -- | |
| | <u>US - A - 2 291 594</u> (PHILLIPS)<br>* Figure; page 1, colonne de gauche, ligne 53 - colonne de droite, ligne 42 * | 1,6 |
| | -- | |
| | <u>FR - A - 699 088</u> (KOHLER)<br>* Figures 1,2; page 2, lignes 17-77 * | 1,3,5 |
| | -- | |
| | <u>DE - A - 2 616 372</u> (WITTKOWSKY)<br>* Page 1, paragraphe 3 * | 7 |
| | -- | |
| A | <u>US - A - 3 053 342</u> (MANSOFF)<br>* Figure 1; colonne 1, ligne 20 - colonne 2, ligne 58 * | 1 |
| | ---- | |

| DOMAINES TECHNIQUES RECHERCHES (Int. Cl. 3) |
|---|
| F 02 B |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 05-03-1980 | WASSENAAR |

OEB Form 1503.1 06.78